# EUROPEAN PATENT SPECIFICATION

(11) **EP 3 803 175 B1**
(45) Date of publication and mention of the grant of the patent: **13.07.2022**
(21) Application number: 19725359.4
(22) Date of filing: 21.05.2019
(51) Int. Cl.: F16L 9/18, F16L 53/70, F16L 53/32, B33Y 80/00, F28D 7/10, F28D 21/00, F28F 9/22

(54) **PIPE COMPONENT MADE OF A METALLIC MATERIAL**
ROHRBAUTEIL AUS EINEM METALLMATERIAL
COMPOSANT TUBULAIRE D'UN MATÉRIAU MÉTALLIQUE

(30) Priority: 29.05.2018 EP 18174889
(43) Date of publication of application: 14.04.2021
(73) Proprietor: BASF SE, 67056 Ludwigshafen am Rhein (DE)
(72) Inventor: SCHILLO, Sebastian Mathias, 74354 Besigheim (DE); NGO, Trung Hieu, 67056 Ludwigshafen (DE); VOLKMANN, Felix Arndt, 67056 Ludwigshafen (DE); BECHTOLD, Florian, 67056 Ludwigshafen (DE); VOGELSGESANG, Fred, 67056 Ludwigshafen (DE); MUELLER, Thomas, 67056 Ludwigshafen (DE)
(74) Representative: BASF IP Association
(86) International application number: PCT/EP2019/063114
(87) International publication number: WO 2019/228865

(56) References cited:
- EP-A1- 2 636 691
- EP-A1- 3 290 766
- US-A- 5 205 969

## Description

The invention concerns a pipe component made of a metallic material for use in a high-pressure process, which has an inner pipe and a jacket surrounding the inner pipe, and whose annular space between the inner pipe and the jacket can be flowed through by a heat transfer fluid. The pipe component has a connecting element at least at one pipe end for connecting the pipe component to another component.

Pipe components with an inner pipe and a jacket surrounding the inner pipe are known from the prior art and are also referred to as "double-walled pipes" or "double jacket pipes". They are often used in process engineering to heat or cool a process fluid flowing through the inner pipe to a defined temperature using a heat transfer fluid flowing through the annular space. A defined temperature control of the process fluid is particularly necessary if the process fluid in the inner pipe undergoes a chemical transformation, as is the case, for example, in tubular reactors. Often such chemical transformations also take place under increased pressure, so that the pipe component is also designed with regard to mechanical strength.

Document EP 3 290 766 A1 discloses such a double-walled pipe with additional guiding structures in the annular space which force the heat transfer fluid to flow through the annular space in a defined manner. The device is manufactured using an additive manufacturing process.

In the conventional production of jacketed steel pipes for high-pressure technology, welding of the inner pipe is generally avoided for safety reasons, since a weld seam represents a potential point of failure. Often the inner pipe is also made of a material that is difficult or impossible to weld, for example stainless steels suitable for high-pressure applications. Conventionally, a press-on ring is therefore first pressed onto the inner pipe under high pressure, and the jacket is then welded to the press-on ring. The press-on ring and the jacket are made of a material that can be welded. Conventional production has several disadvantages. On the one hand, precise cutting of the pressing surface is required as a ramp for pressing on the press-on ring under high pressure, which means high technological and energy costs for production of the pipes. On the other hand, due to the pressing surface and the press-on ring, the pipes have an axial distance between the pipe end and the jacket surface. Although this part of the pipe can be passively insulated, it cannot be actively heated or cooled by a heat transfer fluid flowing in the annular space.

It was an object of the invention to provide a jacketed pipe component made of a metallic material for use in a high-pressure process in which the temperature control is ensured over the entire length of the component, whereby the pipe component at least achieves the properties of the conventional pipe components with regard to safety aspects and the possible pressure load. In addition, the pipe component should be producible in a simple and - in terms of its geometry - flexible manner.

This task is solved according to the invention by a pipe component according to claim 1. Advantageous variants of the pipe component are presented in claims 2 to 11.

In a first embodiment of the invention a pipe component made of a metallic material comprises an inner pipe, a jacket surrounding the inner pipe, an annular space bounded by the outer surface of the inner pipe and the inner surface of the jacket, and a connecting element at least at one pipe end for connecting the pipe component to another component. The jacket has at least one inlet and at least one outlet for a heat transfer fluid. The annular space extends axially up to the connecting element and is bounded and sealed by the connecting element. The connection between connecting element, inner pipe and jacket is made in an additive manufacturing process. According to the invention, the transition surface of the inlet to the annular space and/or the transition surface of the outlet to the annular space is curved with a radius of 0.5 to 20 mm. In an alternative embodiment of the inventive pipe component, the transition surface of the inlet to the annular space and/or the transition surface of the outlet to the annular space is chamfered with an inclination of the chamfer surface of from 20° to 80°. The invention also encompasses designs where one transition surface is curved and another transition surface is chamfered. A combination of curvature and chamfer is also covered by the invention, for example a chamfer the edges of which are curved.

The invention also includes a pipe component made of a metallic material for use in a high-pressure process comprising an inner pipe, a jacket surrounding the inner pipe, an annular space bounded by the outer surface of the inner pipe and the inner surface of the jacket, and a connecting element at least at one pipe end for connecting the pipe component to another component. The jacket has at least one inlet and at least one outlet for a heat transfer fluid. The annular space extends axially up to the connecting element and is bounded and sealed by the connecting element. The connection between connecting element, inner pipe and jacket is made in an additive manufacturing process. According to the invention, the transition surface of the inlet to the annular space and/or the transition surface of the outlet to the annular space is curved with a radius of 0.5 to 20 mm. In an alternative embodiment of the inventive pipe component, the transition surface of the inlet to the annular space and/or the transition surface of the outlet to the annular space is chamfered with an inclination of the chamfer surface of from 20° to 80°. The invention also encompasses designs where one transition surface is curved and another transition surface is chamfered. A combination of curvature and chamfer is also covered by the invention, for example a chamfer the edges of which are curved.

According to the invention, the term "high-pressure process" denotes a process in which the pressure of the process fluid flowing in the inner pipe is more than 100 bar, preferably from 325 bar to 4000 bar. The process fluid can be gaseous, liquid or multi-phase.

It has been found that by additive manufacturing of the connection between the connecting element, inner pipe and jacket a strength can be achieved which is at least equivalent to that of the press-on ring in conventional manufacturing. In contrast to conventional welding, additive manufacturing of the connection does not represent a potential point of failure. In addition, additive manufacturing can be used to process materials that are difficult or impossible to weld conventionally. The distance between the pipe end and the jacket surface, which is unavoidable in conventional manufacturing, does not exist in the case of the pipe component according to the invention, so that the pipe component according to the invention enables significantly better temperature control of a process fluid in the inner pipe by means of a heat transfer medium in the annular space.

Furthermore, it has been found that the curved transition surface and/or the chamfered transition surface allow an improved flow of the heat transfer fluid in comparison to inlets and outlets, as they are known in the prior art, in particular a reduced flow resistance at the inlet and/or the outlet. This also reduces the likelihood of adhesion or fouling at the inlet and/or the outlet. A further advantage is that the stress structure in the pipe component is improved. This results in lower mechanical stress peaks, which reduces the risk of component breakage or failure.

In an advantageous embodiment of the pipe component, the transition surface of the inlet to the annular space and/or the transition surface of the outlet to the annular space is curved with a radius of 0.5 to 10 mm, preferably with a radius of 0.5 to 6 mm.

In another preferred embodiment of the pipe component, the transition surface of the inlet to the annular space and/or the transition surface of the outlet to the annular space is curved with a radius of 2 to 20 mm, preferably with a radius of 2 to 10 mm, more preferably with a radius of 2 to 6 mm.

According to the invention, the term "pipe component" denotes a component through which a process fluid can flow at least in one pipe section, for example a pipe, a pipe branching, e.g. in the form of a T-piece, a manifold, a tube plate of a reactor or heat exchanger, a valve or a lens connection. The pipe section through which the process fluid flows can be straight or curved or can have a more complex geometry. Preferably, the pipe component is a pipe or elbow pipe. For an elbow pipe, a radius of curvature of 10° to 180° is preferred.

The connecting element limits the annular space in the axial direction. It is designed in such a way that the pipe component can be connected to another component by means of the connecting element. The connection between the connecting element and the other component can be made in different ways, for example by a form-locking connection, force-locking connection and/or material locking.

In a preferred embodiment of the inventive pipe component, the connecting element is a flange or an element for connection by means of a weld seam. In the case of a flange connection, the connecting element preferably has openings for a screw connection.

The inlet and the outlet for the heat transfer fluid can be located anywhere in the jacket. There may also be several inlets and/or several outlets. In some applications it is necessary to keep an available space immediately behind the connecting element, for example to be able to make a screw connection between the flange and another component in the case of a flange as connecting element. In an advantageous embodiment of the pipe component, the inlet and/or the outlet for the heat transfer fluid is axially spaced from the connecting element.

In another preferred embodiment of the pipe component, the inlet for the heat transfer fluid is axially spaced from the connecting element, and in the annular space there is a deflecting element which directs the heat transfer fluid entering the annular space in a defined direction within the annular space. In contrast to conventionally manufactured pipe components, additive manufacturing of the pipe component according to the invention allows a directed flow of the heat transfer fluid, so that an individual temperature control of the process fluid can be achieved depending on the respective requirements.

In a particularly preferred variant of this embodiment the deflecting element is designed in such a way that at least part of the heat transfer fluid entering the annular space is directed towards the connecting element. An advantage of this embodiment is that even with an axial distance between inlet and connection element, the heat transfer fluid flows through the entire annular space up to the connection element, and the process fluid can therefore be tempered over the entire length of the pipe.

In another preferred embodiment, fluid channels are provided in the connection element which are in contact with the annular space so that the heat transfer fluid also flows at least partially through the connection element.

In one embodiment of the inventive pipe component, there is a connecting element at both pipe ends which seals the annular space. The respective connection between connecting element, inner pipe and jacket is made in an additive manufacturing process.

According to the invention, the inner pipe and the jacket are connected via the connecting element. A further connection between the inner pipe and the jacket is not mandatory. However, the inner pipe and the jacket can also be connected to each other via further elements. In one embodiment in accordance with the invention, joining elements are present in the annular space which connect the inner pipe and the jacket and are designed in such a way that they stabilize the inner pipe and the jacket against radial pressure loads. This embodiment is particularly suitable for applications where there is a high pressure in the inner pipe and/or in the annular space. This embodiment is also suitable for applications where the mechanical structure of the pipe component is to be supported, for example in the case of long pipes where a uniform annular space over the length of the pipe is to be guaranteed. If joining elements are present, these are preferably arranged concentrically to the center of the pipe. This has the advantage that stresses in the pipe component are best absorbed by the joining elements.

In another embodiment according to the invention, mixing elements are present in the annular space which influence the flow of the heat transfer fluid. The mixing elements are preferably designed in such a way that they run at an angle of 10° to 90°, preferably at an angle of 40° to 50°, particularly preferably at an angle of 45° from the outer surface of the inner pipe to the inner surface of the jacket. The mixing elements can, for example, have the shape of a cylinder, an ellipsoid or bionic shapes. Preferably, several mixing elements are evenly distributed over the circumference. In a variant of the pipe component with mixing elements, several groups of mixing elements are arranged one behind the other in the axial direction. The mixing elements of the respective groups are preferably arranged in opposite directions, so that the direction of flow of the heat transfer fluid changes after each group as it flows through the groups of mixing elements. This allows intensive mixing of the heat transfer fluid, which improves the heat transfer between the heat transfer fluid and the process fluid.

Joining elements and mixing elements can be provided as separate elements. However, they can also be designed as integrated elements, so that a joining element also performs a mixing function, for example.

Dimensions and geometries can be constant or can vary in axial direction over the axial stretch-out of the pipe component. In a preferred embodiment of the inventive pipe component, the wall thicknesses of the inner pipe and of the jacket are constant over the axial stretch-out of the pipe component, so that a constant cross-sectional area of the annular space over the axial stretch-out results.

In another preferred embodiment of the inventive pipe component, the wall thickness of the inner pipe varies in the axial direction. Depending on the requirements, an individual, locally different temperature control of the process fluid flowing through the inner pipe can then be achieved by the heat transfer fluid flowing in the annular space.

In another preferred embodiment of the inventive pipe component, the diameter of the jacket varies in the axial direction, so that the annular space has areas with different cross-sectional areas.

In a further embodiment, the pipe component according to the invention has more than one annular space. In a first preferred variant of this embodiment, the pipe component comprises an inner pipe, an outer pipe and a jacket, the outer surface of the inner pipe and the inner surface of the outer pipe defining a first annular space and the outer surface of the outer pipe and the inner surface of the jacket defining a second annular space. The inner pipe, outer pipe and jacket are preferably arranged concentrically. Both the jacket and the outer pipe each have at least one inlet and at least one outlet for a fluid flowing through the respective annular space.

In one embodiment of this first variant, the wall of the inner pipe is provided with openings through which a fluid flowing in the first annular space can penetrate into the inner pipe. The openings can be large-pored, small-pored and/or microporous, for example to make the wall of the inner pipe a membrane. The openings can have a uniform or a stochastic size distribution. They can be uniformly or stochastically distributed. This design is particularly suitable for targeted dosing of the fluid flowing in the first annular space into the process fluid flowing in the inner pipe, for example for mixing processes or chemical reaction processes in the process fluid. In this design, the wall of the outer pipe preferably has no openings other than inlet(s) and outlet(s), so that the fluid flowing in the second annular space, for example a heat transfer fluid, cannot penetrate into the first annular space.

In another embodiment of this first variant, the wall of the inner pipe and the wall of the outer pipe are sealed so that no fluid can pass from one annular space to another annular space or into the inner pipe. This design is suitable, for example, as a heat exchanger in which not only the process fluid in the inner pipe is tempered, but also another fluid is in heat exchange with the heat transfer medium.

In a second preferred variant of the pipe component with multiple annular spaces, the pipe component comprises an inner pipe and a jacket, the outer surface of the inner pipe and the inner surface of the jacket defining a space which is divided in the axial direction by separating elements into several annular spaces lying one behind the other in the axial direction. Each of the annular spaces is preferably connected to at least one inlet and at least one outlet so that different fluids can flow through them. The annular spaces can be of identical design or differ in terms of design elements and geometries. This second variant is suitable, for example, for the implementation of temperature control of the process fluid flowing in the inner pipe in different temperature zones.

Of course, the first variant and the second variant can also be combined so that several annular spaces are available in axial and/or radial direction.

In a preferred embodiment of the inventive pipe component, the inner diameter of the inner pipe is from 1.6 mm to 400 mm, particularly preferred from 3 mm to 200 mm. The wall thickness of the inner pipe is preferably from 0.5 mm to 80 mm, especially from 1 mm to 15 mm.

According to the invention, the pipe component is made of a metallic material, wherein at least the connection between connecting element, inner pipe and jacket is made in an additive manufacturing process.

Additive manufacturing processes, also referred to as generative manufacturing processes or 3D printing, are known from the prior art. In an additive manufacturing process, the material is added layer by layer to produce a component. In the case of metal powder as a material, for example, metal powder particles are applied iteratively and melted by energy input, so that the component is built up layer by layer. Common processes include selective laser melting (SLM), selective laser sintering (SLS), binder jetting, direct energy deposition, laser metal deposition (LMD) and electron beam melting (EBM).

The pipe component can be manufactured in different ways. In a first preferred variant, the pipe component is completely manufactured in an additive manufacturing process. In this variant, the pipe component is preferably manufactured coaxially to the pipe axis. The layered construction thus begins with the connecting element to which the inner pipe, the jacket and, if necessary, other elements are fused layer by layer.

In a second preferred variant, the connecting element is prefabricated and the inner pipe, the jacket and any other elements are fused onto the connecting element in layers. In this variant, too, the pipe component is preferably manufactured coaxially to the pipe axis.

In a third preferred variant, the inner pipe is prefabricated and the connecting element, the jacket and any other elements are fused to the inner pipe in layers. In this variant, too, the pipe component is preferably manufactured coaxially to the pipe axis.

Additively manufactured components are known to have anisotropy due to the manufacturing technology. It has been found that this anisotropy can be advantageously used to optimize the mechanical properties of the pipe component. In a coaxial structure, where the pipe axis is perpendicular to the metal powder layer, the finished pipe component has maximum strength values with regard to a pressure load in the inner pipe.

As a metallic material, any material that can withstand the loads of the respective pressure range can be used. In the case of variants with prefabricated components, the respective component can be manufactured using known manufacturing processes, for example by conventional methods or additive manufacturing.

Metal powder is preferably used for the additive manufacturing of the connection between connecting element, inner pipe and jacket of the pipe component. The same applies to the additive manufacturing of parts of the pipe component or the entire pipe component.

After fabrication, the pipe component according to the invention may be subjected to posttreatment, in particular homogenization or stress relief annealing. Stress relief annealing relieves residual stresses in the finished pipe component and minimizes subsequent distortion of the pipe component during operation.

Another subject of the invention is the use of a component according to the invention in a high-pressure process.

Preference is given to components manufactured according to the invention in a process for the production of polyolefins. The components are particularly preferred in a process for the production of polyethylene, in particular low-density polyethylene.

Compared to conventionally manufactured jacketed pipes according to the prior art, the pipe component according to the invention has several advantages. Firstly, the usual press-on ring is omitted, which on the one hand ensures temperature control over the entire length of the component, and on the other hand also enables a shorter component length with the same process behavior. From a safety point of view and with regard to the pressure load, the pipe component achieves at least the same properties as conventional components due to the additive manufacturing of the connection between connecting element, inner pipe and jacket. Furthermore, additive manufacturing makes it possible to provide different geometries and elements such as mixing elements in the pipe component, which enable individual temperature control of the process fluid flowing in the inner pipe, which is not possible in a conventional component due to design restrictions.

The invention is explained in more detail below with reference to the drawings. The drawings are to be interpreted as in-principle presentation. They do not constitute any restriction of the invention, for example with regard to specific dimensions or design variants. In the figures:
- Fig. 1: shows a longitudinal section through a pipe section according to the prior art.
- Fig. 2: shows a longitudinal section through a first embodiment according to the invention.
- Fig. 3: shows a longitudinal section through a second embodiment according to the invention.

### List of reference numerals used:

- 1: inner pipe
- 2: jacket
- 3: annular space
- 4: inlet
- 5: outlet
- 6: connecting element
- 7: isolation
- 8: press-on ring
- 9: deflecting element
- 10: joining element
- 11: mixing element
- 12: drill hole

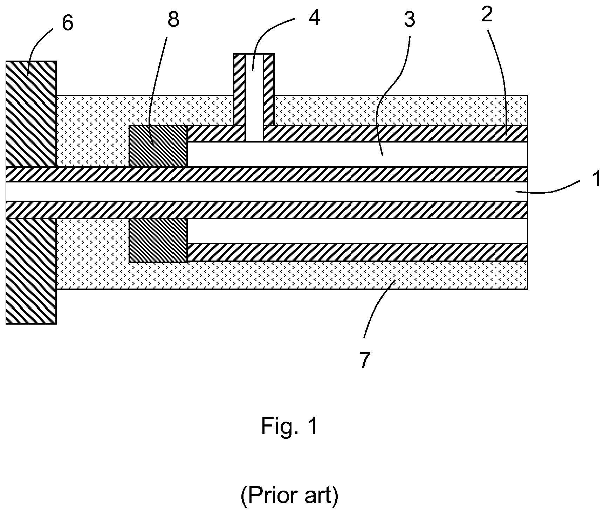

Fig. 1 schematically shows a longitudinal section through a section of a jacketed pipe according to the prior art. An inner pipe 1 is surrounded by a jacket 2, so that there is an annular space 3 between the inner pipe 1 and the jacket 2. The jacket has an inlet 4 for a heat transfer fluid. The heat transfer fluid leaves the annular space 3 via an outlet, which is not shown in Fig. 1. To manufacture the jacket, a press-on ring 8 was pressed onto the outer surface of the inner pipe. The jacket 2 was welded to the press-on ring 8. A flange was then attached to the inner pipe as a connecting element 6, for example by means of a thread or by pressing. The right-hand side of the pipe, which is not shown in Fig. 1, is manufactured in the same way. The space between the two connecting elements 6 is provided with insulation 7 made of an insulating material, e.g. glass wool or mineral wool.

As can be seen from Fig. 1, active temperature control by means of a heat transfer fluid can only be achieved over part of the length of the pipe. This is due to the conventional manufacturing technology using the press-on ring 8. On both sides of the pipe there is an axial distance between the connecting element 6 and the annular space 3. These pipe sections can only be passively insulated by the insulation 7 and are not accessible for active heating or cooling by a heat transfer fluid flowing in the annular space.

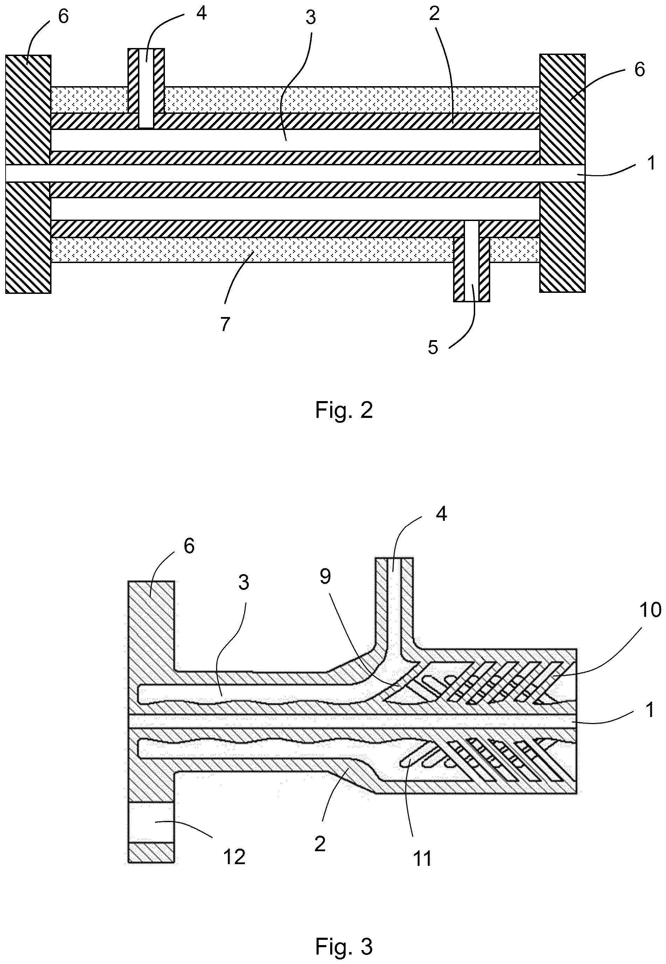

Fig. 2 schematically shows a longitudinal section through a first embodiment of a pipe component according to the invention. The pipe component comprises an inner pipe 1, a jacket 2 surrounding the inner pipe, an annular space 3 bounded by the outer surface of the inner pipe 1 and the inner surface of the jacket 2, as well as a connecting element 6 at each of the two pipe ends for connecting the pipe component to another component. The jacket 2 has an inlet 4 and an outlet 5 for a heat transfer fluid. The annular space 3 extends axially up to both connecting elements 6 and is bounded and sealed by these connecting elements. The connections between the two connecting elements 6, the inner pipe 1 and the jacket 2 were each made in an additive manufacturing process.

A comparison of Figs. 1 and 2 shows that, in contrast to the prior art, active temperature control of a process fluid flowing through the inner pipe 1 over the entire length of the pipe between the two connecting elements 6 is possible without interruption for the pipe component according to the invention.

Fig. 3 shows a longitudinal section through a second embodiment according to the invention which prototypically demonstrates the possibilities of an individual adaptation of the pipe component to the respective requirements. The pipe component comprises an inner pipe 1 which is surrounded by a jacket 2 which has an inlet 4 for a heat transfer fluid. On the left-hand side, the pipe component is bounded by a flange as connecting element 6, on the right-hand side, the connecting element is not shown. The flange has several openings for a screw connection, of which only one hole 12 can be seen in the sectional drawing. The inner diameter of the jacket 2 between the connecting element 6 and the inlet 4 is smaller than the inner diameter of the jacket 2 on the right-hand side after the inlet 4. Consequently, the annular space 3, which is limited by the outer surface of the inner pipe 1 and the inner surface of the jacket 2, has different cross-sections. The annular space 3 extends into the connecting element 6, which also makes it possible to temper the connecting element, which is not possible with state-of-the-art pipe components. The outer surface of the inner pipe 1 varies in a wavelike manner in the axial direction. With a constant inner diameter of the inner pipe, the wall thickness of the inner pipe 1 varies in the axial direction accordingly.

The inlet 4 for the heat transfer fluid is axially spaced from the connecting element 6. In order to ensure a complete flow through the entire annular space 3, a deflecting element 9 is provided in the annular space 3, which directs part of the heat transfer fluid entering the annular space in the direction of the connecting element 6. The transition surface of inlet 4 into annulus 3 is curved.

In the part of the annular space 3 which is located on the right-hand side of the inlet 4 and which has a larger cross-section than the part on the left-hand side of inlet 4 connecting elements 10 are provided which connect the inner pipe 1 and the jacket 2 and stabilize them against radial compressive loads. Furthermore, mixing elements 11 are located in this part of the annular space, which influence the flow of the heat transfer fluid and thus improve the heat transfer between the heat transfer fluid and the process fluid.

The pipe component shown in Fig. 3 was completely manufactured in an additive manufacturing process.

## Claims

1. A pipe component made of a metallic material comprising
an inner pipe (1);
a jacket (2) surrounding the inner pipe (1);
an annular space (3) bounded by the outer surface of the inner pipe (1) and the inner surface of the jacket (2), the jacket (2) having at least one inlet (4) and at least one outlet (5) for a heat transfer fluid; and
a connecting element (6) at least at one pipe end for connecting the pipe component to another component;
wherein the annular space (3) axially extends up to the connecting element (6) and is bounded and sealed by the connecting element (6); and
wherein the connection between connecting element (6), inner pipe (1) and jacket (2) is made in an additive manufacturing process;
**characterized in that** the transition surface of the inlet (4) to the annular space (3) and/or the transition surface of the outlet (5) to the annular space (3) is curved with a radius of 0.5 to 20 mm or is chamfered with an inclination of the chamfer surface of from 20° to 80°.

2. The pipe component according to claim 1, wherein the transition surface is curved with a radius of 0.5 to 10 mm, preferably with a radius of 0.5 to 6 mm.

3. The pipe component according to claim 1, wherein the transition surface is curved with a radius of 2 to 20 mm, preferably with a radius of 2 to 10 mm, more preferably with a radius of 2 to 6 mm.

4. The pipe component according to any of claims 1 to 3, wherein the connecting element (6) is a flange or an element for connection by means of a weld seam.

5. The pipe component according to any of claims 1 to 4, wherein the inlet (4) for the heat transfer fluid is axially spaced from the connecting element (6), and a deflecting element (9) is present in the annular space (3) which directs the heat transfer fluid entering the annular space in a defined direction within the annular space.

6. The pipe component according to claim 5, wherein the deflecting element (9) conducts at least part of the heat transfer fluid entering the annular space (3) towards the connecting element (6).

7. The pipe component according to any of claims 1 to 6, wherein a respective connecting element (6) is present at both pipe ends, which bounds and seals the annular space (3), and wherein the respective connection between connecting element (6), inner pipe (1) and jacket (2) is made in an additive manufacturing process.

8. The pipe component according to any of claims 1 to 7, wherein joining elements (10) are present in the annular space (3), which connect the inner pipe (1) and the jacket (2) and are designed in such a way that they stabilize the inner pipe and the jacket against radial pressure loads.

9. The pipe component according to any of claims 1 to 8, wherein mixing elements (11) are present in the annular space which influence the flow of the heat transfer fluid.

10. The pipe component according to any of claims 1 to 9, wherein the wall thickness of the inner pipe (1) varies in the axial direction.

11. The pipe component according to any of claims 1 to 10, wherein the pipe component is completely manufactured in an additive manufacturing process.

12. Use of a pipe component according to any of claims 1 to 11 in a high-pressure process in which the pressure of the process fluid flowing through the inner pipe is more than 100 bar, preferably from 325 bar to 4000 bar.

13. Use of a pipe component according to claim 12 in a process for the production of polyethylene, preferably low-density polyethylene.

## Patentansprüche

1. Rohrbauteil aus einem Metallmaterial, umfassend:
ein Innenrohr (1);
einen Mantel (2), der das Innenrohr (1) umgibt;
einen Ringraum (3), der durch die Außenfläche des Innenrohrs (1) und die Innenfläche des Mantels (2) umgrenzt wird, wobei der Mantel (2) mindestens einen Einlass (4) und mindestens einen Auslass (5) für ein Wärmeübertragungsfluid aufweist; und
ein Verbindungselement (6) an mindestens einem Rohrende, um das Rohrbauteil mit einem anderen Bauteil zu verbinden;
wobei der Ringraum (3) sich axial bis zu dem Verbindungselement (6) erstreckt und durch das Verbindungselement (6) umgrenzt und abgedichtet wird; und
wobei die Verbindung zwischen dem Verbindungselement (6), dem Innenrohr (1) und dem Mantel (2) in einem additiven Fertigungsprozess gefertigt wird;
**dadurch gekennzeichnet, dass** die Übergangsfläche des Einlasses (4) zu dem Ringraum (3) und/oder die Übergangsfläche des Auslasses (5) zu dem Ringraum (3) mit einem Radius von 0,5 bis 20 mm gekrümmt ist oder mit einer Neigung der Fasenfläche von 20° bis 80° abgefast ist.

2. Rohrbauteil nach Anspruch 1, wobei die Übergangsfläche mit einem Radius von 0,5 bis 10 mm, vorzugsweise mit einem Radius von 0,5 bis 6 mm gekrümmt ist.

3. Rohrbauteil nach Anspruch 1, wobei die Übergangsfläche mit einem Radius von 2 bis 20 mm, vorzugsweise mit einem Radius von 2 bis 10 mm, vorzugsweise mit einem Radius von 2 bis 6 mm gekrümmt ist.

4. Rohrbauteil nach einem der Ansprüche 1 bis 3, wobei das Verbindungselement (6) ein Flansch oder ein Element zum Verbinden mittels einer Schweißnaht ist.

5. Rohrbauteil nach einem der Ansprüche 1 bis 4, wobei der Einlass (4) für das Wärmeübertragungsfluid von dem Verbindungselement (6) axial beabstandet ist und ein Ablenkelement (9) in dem Ringraum (3) vorhanden ist, welches das Wärmeübertragungsfluid, das in den Ringraum eintritt, in eine definierte Richtung innerhalb des Ringraums lenkt.

6. Rohrbauteil nach Anspruch 5, wobei das Ablenkelement (9) mindestens einen Teil des Wärmeübertragungsfluids, das in den Ringraum (3) eintritt, in Richtung des Verbindungselements (6) lenkt.

7. Rohrbauteil nach einem der Ansprüche 1 bis 6, wobei ein jeweiliges Verbindungselement (6) an beiden Rohrenden vorhanden ist, welches den Ringraum (3) umgrenzt und abdichtet, und wobei die jeweilige Verbindung zwischen Verbindungselement (6), Innenrohr (1) und Mantel (2) in einem additiven Fertigungsprozess gefertigt wird.

8. Rohrbauteil nach einem der Ansprüche 1 bis 7, wobei Fügeelemente (10) in dem Ringraum (3) vorhanden sind, welche das Innenrohr (1) und den Mantel (2) verbinden und in einer solchen Weise konzipiert sind, dass sie das Innenrohr und den Mantel gegen radiale Drucklasten stabilisieren.

9. Rohrbauteil nach einem der Ansprüche 1 bis 8, wobei Mischelemente (11) in dem Ringraum vorhanden sind, welche die Strömung des Wärmeübertragungsfluids beeinflussen.

10. Rohrbauteil nach einem der Ansprüche 1 bis 9, wobei die Wanddicke des Innenrohrs (1) in der Axialrichtung variiert.

11. Rohrbauteil nach einem der Ansprüche 1 bis 10, wobei das Rohrbauteil vollständig in einem additiven Fertigungsprozess gefertigt ist.

12. Verwendung eines Rohrbauteils nach einem der Ansprüche 1 bis 11 in einem Hochdruckprozess, bei dem der Druck des Prozessfluids, das durch das Innenrohr strömt, mehr als 100 bar, vorzugsweise 325 bar bis 4000 bar beträgt.

13. Verwendung eines Rohrbauteils nach Anspruch 12 in einem Prozess zur Produktion von Polyethylen, vorzugsweise Polyethylen mit niedriger Dichte.

## Revendications

1. Composant tuyau fait d'un matériau métallique, comprenant :
un tuyau intérieur (1) ;
une chemise (2) entourant le tuyau intérieur (1) ;
un espace annulaire (3) limité par la surface extérieure du tuyau intérieur (1) et la surface intérieure de la chemise (2), la chemise (2) ayant au moins une entrée (4) et au moins une sortie (5) pour un fluide de transfert de chaleur ; et
un élément de raccordement (6) au moins à une extrémité de tuyau pour raccorder le composant tuyau à un autre composant ;
dans lequel l'espace annulaire (3) s'étend axialement jusqu'à l'élément de raccordement (6) et est limité et étanchéifié par l'élément de raccordement (6) ; et
dans lequel le raccord entre l'élément de raccordement (6), le tuyau intérieur (1) et la chemise (2) est réalisé dans un procédé de fabrication additive ;
**caractérisé en ce que** la surface de transition de l'entrée (4) à l'espace annulaire (3) et/ou la surface de transition de la sortie (5) à l'espace annulaire (3) est incurvée avec un rayon de 0,5 à 20 mm ou est chanfreinée avec une inclinaison de la surface de chanfrein de 20° à 80°.

2. Composant tuyau selon la revendication 1, dans lequel la surface de transition est incurvée avec un rayon de 0,5 à 10 mm, de préférence avec un rayon de 0,5 à 6 mm.

3. Composant tuyau selon la revendication 1, dans lequel la surface de transition est incurvée avec un rayon de 2 à 20 mm, de préférence avec un rayon de 2 à 10 mm, mieux encore avec un rayon de 2 à 6 mm.

4. Composant tuyau selon l'une quelconque des revendications 1 à 3, dans lequel l'élément de raccordement (6) est une bride ou un élément pour le raccordement au moyen d'un joint de soudure.

5. Composant tuyau selon l'une quelconque des revendications 1 à 4, dans lequel l'entrée (4) pour le fluide de transfert de chaleur est axialement espacée de l'élément de raccordement (6), et un élément déflecteur (9) est présent dans l'espace annulaire (3) qui dirige le fluide de transfert de chaleur entrant dans l'espace annulaire dans une direction définie à l'intérieur de l'espace annulaire.

6. Composant tuyau selon la revendication 5, dans lequel l'élément déflecteur (9) conduit au moins une partie du fluide de transfert de chaleur entrant dans l'espace annulaire (3) vers l'élément de raccordement (6).

7. Composant tuyau selon l'une quelconque des revendications 1 à 6, dans lequel un élément de raccordement respectif (6) est présent aux deux extrémités de tuyau, qui limite et étanchéifie l'espace annulaire (3), et dans lequel le raccord respectif entre l'élément de raccordement (6), le tuyau intérieur (1) et la chemise (2) est réalisé dans un procédé de fabrication additive.

8. Composant tuyau selon l'une quelconque des revendications 1 à 7, dans lequel des éléments de jonction (10) sont présents dans l'espace annulaire (3), qui raccordent le tuyau intérieur (1) et la chemise (2) et sont conçus de manière telle qu'ils stabilisent le tuyau intérieur et la chemise contre des charges de pression radiales.

9. Composant tuyau selon l'une quelconque des revendications 1 à 8, dans lequel des éléments mélangeurs (11) sont présents dans l'espace annulaire qui influencent l'écoulement du fluide de transfert de chaleur.

10. Composant tuyau selon l'une quelconque des revendications 1 à 9, dans lequel l'épaisseur de paroi du tuyau intérieur (1) varie dans la direction axiale.

11. Composant tuyau selon l'une quelconque des revendications 1 à 10, dans lequel le composant tuyau est complètement fabriqué dans un procédé de fabrication additive.

12. Utilisation d'un composant tuyau selon l'une quelconque des revendications 1 à 11 dans un procédé à haute pression dans lequel la pression du fluide de procédé s'écoulant à travers le tuyau intérieur est supérieure à 100 bar, de préférence de 325 bar à 4000 bar.

13. Utilisation d'un composant tuyau selon la revendication 12 dans un procédé pour la production de polyéthylène, de préférence de polyéthylène basse densité.
